(19) Europäisches Patentamt / European Patent Office / Office européen des brevets

(11) **EP 4 315 547 B1**

(12) **EUROPEAN PATENT SPECIFICATION**

(45) Date of publication and mention
of the grant of the patent:
**02.04.2025 Bulletin 2025/14**

(21) Application number: **22710436.1**

(22) Date of filing: **23.02.2022**

(51) International Patent Classification (IPC):
*H02J 3/14* (2006.01)    *H02J 3/38* (2006.01)
*F25B 27/00* (2006.01)

(52) Cooperative Patent Classification (CPC):
**H02J 3/14; H02J 3/381;** F25B 27/00; F25B 2400/06;
H02J 2300/24; H02J 2310/14; H02J 2310/52

(86) International application number:
**PCT/IB2022/051569**

(87) International publication number:
**WO 2022/208179 (06.10.2022 Gazette 2022/40)**

(54) **SYSTEM FOR THE STORAGE OF REFRIGERATION ENERGY**

SYSTEM ZUR SPEICHERUNG VON KÄLTEENERGIE

SYSTÈME DE STOCKAGE D'ÉNERGIE DE RÉFRIGÉRATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Validation States:
**MA**

(30) Priority: **30.03.2021 IT 202100007727**

(43) Date of publication of application:
**07.02.2024 Bulletin 2024/06**

(73) Proprietor: **Gelsystem S.r.l.
00197 Rome (IT)**

(72) Inventors:
• **BATTAGLINI, Manuel
01023 Bolsena (VT) (IT)**
• **BORDINI, Giuseppe
58054 Scansano (GR) (IT)**

(74) Representative: **Barbaro, Gaetano et al
Società Italiana Brevetti S.p.A.
Via G. Carducci, 8
20123 Milano (IT)**

(56) References cited:
**US-A1- 2018 106 510**

## Description

The present invention relates to a system for the storage of refrigeration energy.

## Background

As it is known, the only way to perform a storage of the energy produced by the photovoltaic panels in excess of the need, is to transfer such exceeding energy in the recharge of bulky storage batteries. It follows that an operation having available photovoltaic panels stores the exceeding electric energy in huge batteries so as to use the same then in a second moment or to sell to the network operator the energy produced in excess (always with a lower economic return than the collection one).

Typically, then, the users of photovoltaic solar panels do not succeed in exploiting wholly and in an efficient way the current produced in excess throughout the day.

In fact, nowadays, the technology for the storage of electric energy does not currently provide batteries with capacity higher than 20 Kw. These can be sufficient for limited needs, for example domestic needs, but they cannot meet the needs of industrial users.

Then, in particular for users which have to power electrically high-consumption apparatuses (for example refrigerated apparatuses), often requiring three-phase power supply, the storage of electric energy is not particularly helpful, on the contrary it results to be an anti-economic solution.

In fact, the same storage process does not even have a particularly high efficiency and moreover the batteries have an extremely high cost, especially if they have large size.

Then, particularly for industrial users of this type, the problem of the energy consumption linked to the use of the apparatuses, especially during the non-production periods of the photovoltaic panels, is particularly felt.

A problem which typically arises is that of the need for having to use the refrigerated apparatuses (storage cells, pools of freezing water and so on) even in the night hours, then without being able to use the energy produced by the photovoltaic panels, and then by collecting electric energy directly from the network.

US2018/106510 discloses a refrigeration control system that determines when DC power is provided by a photovoltaic (PV) source or by a non-PV source: when DC power is provided by the PV source, power consumption by the refrigeration system is maximized such that cooling of a chamber of the refrigeration system is limited only by a refrigerant capacity of the refrigeration system; when DC power is provided by a non-PV source, power consumption is managed to maintain a temperature range in the chamber.

The present invention proposes a system and a method for exploiting the energy produced in excess by the photovoltaic panels during the night hours, in case of users which have to use refrigerated apparatuses within 24 hours.

## Technical problem solved by the invention

The solution according to the present invention inserts in this context, the invention proposing to provide a system allowing to store the electric energy produced in excess by the photovoltaic panels under the form of refrigeration energy, directly inside the system itself, so that the use could burden as little as possible on the electric power supply in the not-production phases of the photovoltaic panels.

The object of the present invention is then to solve the problems left unsolved by the known art, by providing a control device as defined in claim 1.

The present invention further relates to a refrigeration system as defined in the independent claim 5.

The present invention still further relates to a control method of a refrigeration system, as defined in claim 6.

Additional features of the present invention are defined in the corresponding depending claims.

The advantages, together with the features and use modes of the present invention, will result evident from the following detailed description of preferred embodiments thereof, shown by way of example and not for limitative purposes.

## Brief description of figures

Hereinafter in this description reference will be made to the drawings shown in the enclosed figures, wherein:

- figure 1 is an exemplifying scheme of a refrigeration system according to the present invention; and

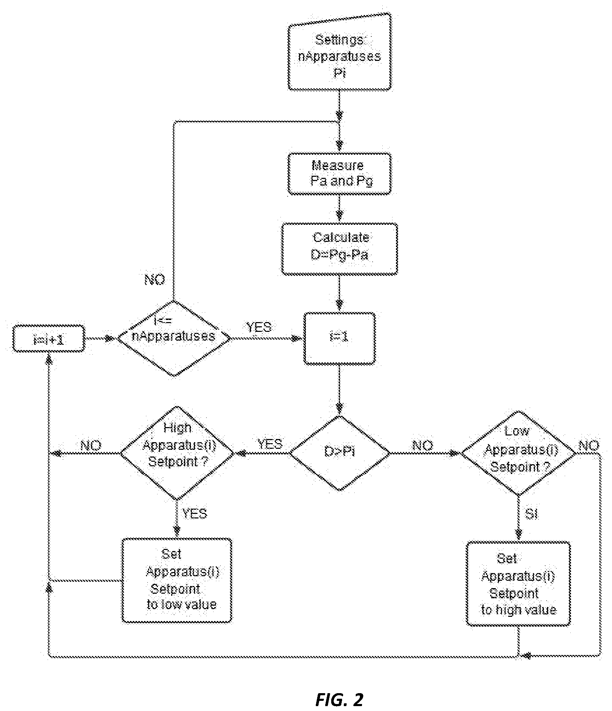

- figure 2 is an exemplifying flow chart of a control method according to the present invention.

## Detailed description of preferred embodiments

The present invention will be described hereinafter by making reference to the above-mentioned figures.

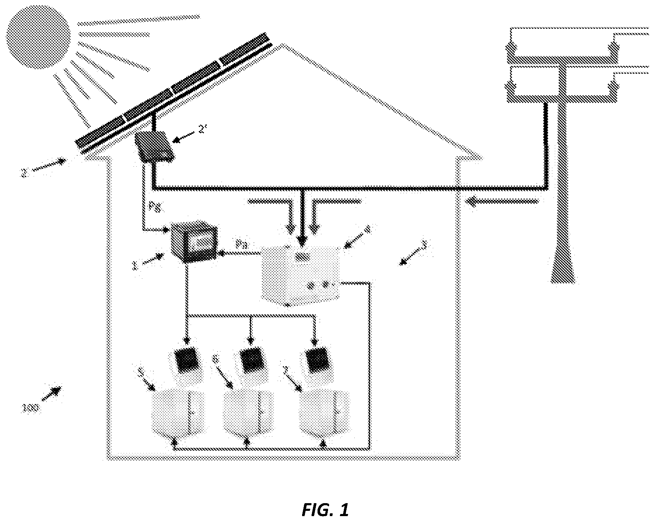

In particular, figure 1 shows, by way of example, a system 100 according to the present invention.

According to the present invention, a refrigeration system 3 comprises a refrigeration unit 4 which can drive one or more refrigeration apparatuses 5, 6, 7 connected thereto. Each one of the refrigeration apparatuses 5, 6, 7 considered within the present invention is of the type having a configuration input for controlling from outside, through setting commands, some operation parameters, thereamong for example a temperature setpoint SPi. Under the term temperature setpoint the value of temperature at which a thermostat inside the apparatus is set and which one wishes to make the apparatus itself reaching during operation. Moreover, each refrigeration apparatus 5, 6, 7 of course is characterized by a nominal absorbed power Pi.

The refrigeration unit 4 is electrically powered with a mixed system, both through the mains, and through a photovoltaic panel power generator 2, adjusted by an inverter 2'.

As it is known, depending upon the production of the photovoltaic panels, a more or less important collection of electric energy from the network will be made to meet the system requirement.

According to an aspect of the present invention, the system 100 provides a control device 1, for example a PLC, performing the role of interface between the photovoltaic panel generator 2 and the refrigeration system 3.

A control device 1 according to the invention, comprises means for measuring a first instantaneous value of power Pg produced by the generator 2. Advantageously, such measuring means can be represented by an input of the PLC dedicated to receive a signal from the inverter 2' of the generator, proportional to the instantaneous power Pg generated by the panels.

Moreover, the device 1 further comprises means for measuring a second instantaneous value of power Pa absorbed by the refrigeration unit 4. For example, such means can comprise an amperometric detection device connected to an additional PLC input.

Additionally, the device comprises means for the acquisition of third values Pi identifying the nominal power absorbed by each one of the connected refrigeration apparatuses 5, 6, 7. By way of example, such values can be acquired during the preliminary setting of the system, through a user interface system for the data input, and stored in a PLC memory.

The device 1 further comprises a programmable unit, configured and programmed for processing the measured and acquired values. In particular the programmable unit is programmed for using the first, second and third values Pg, Pa, Pi in order to determine temperature setpoint setting commands to be sent to one or more of said refrigeration apparatuses 5, 6, 7, according to a logic which will be described hereinafter.

Of course, the control device 1 will include even means for transmitting said setting commands to the refrigeration apparatuses 5, 6, 7. For example such means for the transmission can be implemented through PLC outputs connected to respective configuration inputs of the refrigeration apparatuses 5, 6, 7, as even schematically illustrated in figure 1.

Generally, the control and interface device 1 according to the present invention, bases its control logic upon the determination of a state of photovoltaic power generator 2.

To this purpose, the first and second values of power Pg, Pa are processed by the programmable unit to calculate a difference $\Delta$ between said first value Pg and said second value Pa:

$$\Delta = Pg - Pa.$$

Based upon the difference $\Delta$ a first state, in which the generator 2 produces more energy than it is required, is discriminated from a second state, in which the generator 2 produces less energy than it is required.

The programmable unit of the device 1 then is programmed so that when the difference $\Delta$ is greater than the smallest one of the third acquired and stored values Pi setting commands are determined (and consequently sent) to lower the temperature setpoint SPi of all refrigeration apparatuses 5, 6, 7 for which the difference $\Delta$ is greater than the respective third value Pi.

Let's consider for example a case wherein a first apparatus 5 has absorbed nominal power P1 equal to 20kW, a second apparatus 6 has absorbed nominal power P2 equal to 30kW, a third apparatus 7 has absorbed nominal power P3 equal to 50kW.

Each one of the three apparatuses provides a standard prefixed temperature setpoint and moreover the possibility of varying the temperature setpoint within a predetermined range. Let's assume for example that for such apparatuses the standard prefixed temperature setpoint is -20°, that is could assume the values - 20° and -30° and that, at first, they all have the setpoint set to -20°.

By assuming a measure of the instantaneous values of power Pg generated by the generator 2 and of power Pa absorbed by the unit 4, respectively equal to 40kW and 15kW, a difference $\Delta = 40-15 = 25kW$ would be obtained.

Under these circumstances, $\Delta$ would be greater than P1 and lower than P2 and P3. Then, the programme of the device control unit will provide for determining a command for setting the temperature setpoint for the apparatus 5, so that the respective setpoint is lowered to the value of -30°.

In practice, the setting command can be implemented for example in the form of an electric contact or through a digital port which, when closed by the control device, is interpreted by the refrigeration apparatus as a signal of low logic level and corresponding to the lowest setpoint value (-30°).

On the contrary, for all the connected apparatuses the nominal power value thereof is higher than the difference $\Delta$, the control device provides a setting command to bring the temperature setpoint to the highest level. In the preceding example, for the apparatuses 6 and 7, respectively with P2=30kW and P3=50kW, the device would provide the setting of the respective setpoints to the highest value of -20°.

When the generator 2 is in the second provided state, wherein the difference $\Delta$ is lower or equal to the smallest one of the third acquired and stored values Pi, all refrigeration apparatuses 5, 6, 7 connected to the unit will receive by the control device 1 a respective setting command so as to bring the respective setpoint to the prefixed standard operation value, for example -20°.

The present invention has been sofar described with reference to preferred embodiments thereof. It is to be meant that each one of the technical solutions implemented in the preferred embodiments, herein described by way of example, can advantageously be combined, differently from what described, with the other ones, to create additional embodiments, belonging to the same inventive core and however all within the protective scope of the herebelow reported claims.

**Claims**

1. A control device (1) for interfacing a photovoltaic panel power generator (2) and a refrigeration system (3) comprising a refrigeration unit (4) configured to drive a plurality of refrigeration apparatuses (5, 6, 7) adapted to receive commands for setting respective temperature setpoints (SPi), said interface device (1) comprising:

   - means for measuring a first instantaneous value of power (Pg) produced by the generator (2);
   - means for measuring a second instantaneous value of power (Pa) absorbed by the refrigeration unit (4);
   - means for the acquisition of third values (Pi) identifying the nominal power of each one of the connected refrigeration apparatuses (5, 6, 7);
   - a programmable unit configured to process said first, second and third values (Pg, Pa, Pi) in order to determine temperature setpoint setting commands to be sent to one or more of said refrigeration apparatuses (5, 6, 7); and
   - means for transmitting said setting commands to said one or more refrigeration apparatuses (5, 6, 7).

2. The device (1) according to claim 1, wherein said first and second values (Pg, Pa) are processed by the programmable unit (12) to calculate a difference (Δ) between said first value (Pg) and said second value (Pa).

3. The device (1) according to claim 2, wherein said programmable unit is programmed in such a way that when the difference (Δ) is greater than the smallest one of said third values (Pi), setting commands are determined to lower the temperature setpoint (SPi) of all refrigeration apparatuses (5, 6, 7) for which the difference (Δ) is greater than the respective third value (Pi).

4. The device (1) according to claim 2 or 3, wherein said programmable unit is configured in such a way that, when the difference (Δ) is greater than the smallest one of said third values (Pi), setting commands are determined to raise the temperature setpoint (SPi) of all refrigeration apparatuses (5, 6, 7) for which the difference (Δ) is less than or equal to the respective third value (Pi).

5. A system (100) comprising a refrigeration unit (4) configured to drive a plurality of refrigeration apparatuses (5, 6, 7), a photovoltaic panel power generator (2) and a control device (1) according to one of the preceding claims.

6. A method of controlling a system (100) according to claim 5, comprising the following steps of:

   - measuring a first instantaneous value of power (Pg) produced by the generator (2);
   - measuring a second instantaneous value of power (Pa) absorbed by the refrigeration unit (4);
   - acquiring third values (Pi) identifying the nominal power of each one of the connected refrigeration apparatuses (5, 6, 7);
   - processing said first, second and third values (Pg, Pa, Pi) in order to determine temperature setpoint setting commands to be sent to one or more of said refrigeration apparatuses (5, 6, 7); and
   - transmitting said setting commands to said one or more refrigeration apparatuses (5, 6, 7).

7. The control method according to claim 6, wherein said first and second values (Pg, Pa) are processed to calculate a difference (Δ) between said first value (Pg) and said second value (Pa).

8. The control method according to claim 7, wherein when the difference (Δ) is greater than the smallest one of said third values (Pi) setting commands are determined to lower the temperature setpoint (SPi) of all refrigeration apparatuses (5, 6, 7) for which the difference (Δ) is greater than the respective third value (Pi).

9. The control method according to claim 7 or 8, wherein when the difference (Δ) is greater than the smallest one of said third values (Pi), setting commands are determined to raise the temperature setpoint (SPi) of all refrigeration apparatuses (5, 6, 7) for which the difference (Δ) is lower than or equal to the respective third value (Pi).

**Patentansprüche**

1. Steuervorrichtung (1) zum Verbinden eines Photovoltaikpanel-Stromgenerators (2) mit einem Kühlsystem (3), das eine Kühleinheit (4) umfasst, die zum Antreiben einer Vielzahl von Kühleinrichtungen (5, 6, 7) konfiguriert ist, die zum Empfangen von Befehlen zum Einstellen jeweiliger Temperatur-Sollwerte (SPi) geeignet sind, wobei die Schnittstellenvorrichtung (1) umfasst:

- Mittel zum Messen eines ersten Momentanwerts der vom Generator (2) erzeugten Leistung (Pg);
- Mittel zum Messen eines zweiten Momentanwerts der von der Kühleinheit (4) aufgenommenen Leistung (Pa);
- Mittel zum Erfassen dritter Werte (Pi), die die Nennleistung jeder einzelnen der angeschlossenen Kühleinrichtungen (5, 6, 7) identifizieren;
- eine programmierbare Einheit, die konfiguriert ist, um den ersten Wert, den zweiten Wert und die dritten Werte (Pg, Pa, Pi) zu verarbeiten, um an eine oder mehrere der Kühleinrichtungen (5, 6, 7) zu sendende Befehle zur Einstellung des Temperatursollwerts zu bestimmen; und
- Mittel zum Übertragen der Einstellbefehle an die eine oder die mehreren Kühleinrichtungen (5, 6, 7).

2. Vorrichtung (1) nach Anspruch 1, wobei der erste und der zweite Wert (Pg, Pa) von der programmierbaren Einheit (12) verarbeitet werden, um eine Differenz ($\triangle$) zwischen dem ersten Wert (Pg) und dem zweiten Wert (Pa) zu berechnen.

3. Vorrichtung (1) nach Anspruch 2, wobei die programmierbare Einheit so programmiert ist, dass, wenn die Differenz ($\triangle$) größer ist als der kleinste der dritten Werte (Pi), Einstellbefehle bestimmt werden, um den Temperatursollwert (SPi) aller Kühleinrichtungen (5, 6, 7) zu senken, für die die Differenz ($\triangle$) größer ist als der jeweilige dritte Wert (Pi).

4. Vorrichtung (1) nach Anspruch 2 oder 3, wobei die programmierbare Einheit so konfiguriert ist, dass, wenn die Differenz ($\triangle$) größer als der kleinste der dritten Werte (Pi) ist, Einstellbefehle bestimmt werden, um den Temperatursollwert (SPi) aller Kühleinrichtungen (5, 6, 7) anzuheben, für die die Differenz ($\triangle$) kleiner oder gleich dem jeweiligen dritten Wert (Pi) ist.

5. System (100), umfassend eine Kühleinheit (4), die konfiguriert ist, um eine Vielzahl von Kühleinrichtungen (5, 6, 7) anzutreiben, einen Photovoltaikpanel-Stromgenerator (2) und eine Steuervorrichtung (1) nach einem der vorstehenden Ansprüche.

6. Verfahren zum Steuern eines Systems (100) nach Anspruch 5, umfassend die folgenden Schritte:

- Messen eines ersten Momentanwerts der vom Generator (2) erzeugten Leistung (Pg);
- Messen eines zweiten Momentanwerts der von der Kühleinheit (4) aufgenommenen Leistung (Pa);
- Erfassen von dritten Werten (Pi), die die Nennleistung jeder einzelnen der angeschlossenen Kühleinrichtungen (5, 6, 7) identifizieren;
- Verarbeiten des ersten Wertes, des zweiten Wertes und der dritten Werte (Pg, Pa, Pi), um an eine oder mehrere der Kühleinrichtungen (5, 6, 7) zu sendende Befehle zur Einstellung des Temperatur-Sollwerts zu bestimmen; und
- Übertragen der Einstellbefehle an eine oder mehrere Kühleinrichtungen (5, 6, 7).

7. Steuerverfahren nach Anspruch 6, wobei der erste und der zweite Wert (Pg, Pa) verarbeitet werden, um eine Differenz ($\triangle$) zwischen dem ersten Wert (Pg) und dem zweiten Wert (Pa) zu berechnen.

8. Steuerverfahren nach Anspruch 7, wobei, wenn die Differenz ($\triangle$) größer als der kleinste der dritten Werte (Pi) ist, Einstellbefehle bestimmt werden, um den Temperatursollwert (SPi) aller Kühleinrichtungen (5, 6, 7) zu senken, für die die Differenz ($\triangle$) größer ist als der jeweilige dritte Wert (Pi).

9. Steuerverfahren nach Anspruch 7 oder 8, wobei, wenn die Differenz ($\triangle$) größer als der kleinste der dritten Werte (Pi) ist, Einstellbefehle bestimmt werden, um den Temperatursollwert (SPi) aller Kühleinrichtungen (5, 6, 7) anzuheben, für die die Differenz ($\triangle$) kleiner oder gleich dem jeweiligen dritten Wert (Pi) ist.

**Revendications**

1. Dispositif de commande (1) permettant de réaliser une interface avec un générateur de puissance à panneaux photovoltaïques (2) et un système frigorifique (3) comprenant une unité frigorifique (4) configurée pour entraîner une pluralité d'appareils frigorifiques (5, 6, 7) adaptés pour recevoir des instructions de réglage de points de consigne de température (SPi) respectifs, ledit dispositif d'interface (1) comprenant :

- des moyens permettant de mesurer une première valeur instantanée de puissance (Pg) produite par le générateur (2) ;
- des moyens permettant de mesurer une deuxième valeur instantanée de puissance (Pa) absorbée par l'unité frigorifique (4) ;
- des moyens pour l'acquisition de troisièmes valeurs (Pi) identifiant la puissance nominale de chacun des appareils frigorifiques (5, 6, 7) connectés ;
- une unité programmable configurée pour traiter lesdites première, deuxième et troisième valeurs (Pg, Pa, Pi) afin de déterminer des instructions de réglage de point de consigne de température à envoyer à un ou plusieurs desdits appareils frigorifiques (5, 6, 7) ; et
- des moyens permettant de transmettre des instructions de réglage audit ou auxdits appareils frigorifiques (5, 6, 7).

2. Dispositif (1) selon la revendication 1, dans lequel lesdites première et deuxième valeurs (Pg, Pa) sont traitées par l'unité programmable (12) pour calculer une différence ($\triangle$) entre ladite première valeur (Pg) et ladite deuxième valeur (Pa).

3. Dispositif (1) selon la revendication 2, dans lequel ladite unité programmable est programmée de telle sorte que, lorsque la différence ($\triangle$) est supérieure à la plus petite desdites troisièmes valeurs (Pi), des instructions de réglage sont déterminées pour abaisser le point de consigne de température (SPi) de tous les appareils frigorifiques (5, 6, 7) pour lesquels la différence ($\triangle$) est supérieure à la troisième valeur (Pi) respective.

4. Dispositif (1) selon la revendication 2 ou 3, dans lequel ladite unité programmable est configurée de telle sorte que, lorsque la différence ($\triangle$) est supérieure à la plus petite desdites troisièmes valeurs (Pi), des instructions de réglage sont déterminées pour augmenter le point de consigne de température (SPi) de tous les appareils frigorifiques (5, 6, 7) pour lesquels la différence ($\triangle$) est inférieure ou égale à la troisième valeur (Pi) respective.

5. Système (100) comprenant une unité frigorifique (4) configurée pour entraîner une pluralité d'appareils frigorifiques (5, 6, 7), un générateur de puissance à panneaux photovoltaïques (2) et un dispositif de commande (1) selon l'une des revendications précédentes.

6. Procédé de commande d'un système (100) selon la revendication 5, comprenant les étapes suivantes consistant à :

   - mesurer une première valeur instantanée de puissance (Pg) produite par le générateur (2) ;
   - mesurer une deuxième valeur instantanée de puissance (Pa) absorbée par l'unité frigorifique (4) ;
   - acquérir des troisièmes valeurs (Pi) identifiant la puissance nominale de chacun des appareils frigorifiques (5, 6, 7) connectés ;
   - traiter lesdites première, deuxième et troisième valeurs (Pg, Pa, Pi) afin de déterminer des instructions de réglage de point de consigne de température à envoyer à un ou plusieurs desdits appareils frigorifiques (5, 6, 7) ; et
   - transmettre lesdites instructions de réglage audit ou auxdits appareils frigorifiques (5, 6, 7).

7. Procédé de commande selon la revendication 6, dans lequel lesdites première et deuxième valeurs (Pg, Pa) sont traitées pour calculer une différence ($\triangle$) entre ladite première valeur (Pg) et ladite deuxième valeur (Pa).

8. Procédé de commande selon la revendication 7, dans lequel, lorsque la différence ($\triangle$) est supérieure à la plus petite desdites troisièmes valeurs (Pi), des instructions de réglage sont déterminées pour abaisser le point de consigne de température (SPi) de tous les appareils frigorifiques (5, 6, 7) pour lesquels la différence ($\triangle$) est supérieure à la troisième valeur (Pi) respective.

9. Procédé de commande selon la revendication 7 ou 8, dans lequel, lorsque la différence ($\triangle$) est supérieure à la plus petite desdites troisièmes valeurs (Pi), des instructions de réglage sont déterminées pour augmenter le point de consigne de température (SPi) de tous les appareils frigorifiques (5, 6, 7) pour lesquels la différence ($\triangle$) est inférieure ou égale à la troisième valeur (Pi) respective.

**FIG. 1**

**FIG. 2**

**REFERENCES CITED IN THE DESCRIPTION**

**Patent documents cited in the description**

- US 2018106510 A